# EUROPEAN PATENT APPLICATION

(11) **EP 4 184 753 A1**
(43) Date of publication of application: **24.05.2023**
(21) Application number: 22207762.0
(22) Date of filing: 16.11.2022
(51) Int. Cl.: H02J 50/40, H02J 50/80, H02J 50/90

(54) **COIL ALIGNMENT CONTROL METHOD AND APPARATUS FOR THE WIRELESS CHARGING OF VEHICLES**

(30) Priority: 17.11.2021 KR 20210158440; 27.10.2022 KR 20220140460
(71) Applicant: Chungbuk National University Industry-Academic Cooperation Foundation, Cheongju-si, Chungcheongbuk-do 28644 (KR)
(72) Inventor: AHN, Bierngchearl, 28650 Cheongju-si, Chungcheongbuk-do (KR)
(74) Representative: BCKIP Part mbB

(57) **Abstract**

The present disclosure in some embodiments provides a coil alignment control method and a coil alignment control apparatus for the wireless charging of a mobile object, which perform a parallel alignment for aligning a power reception-side surface of a power reception coil of the mobile object to be parallel to a power transmission-side surface of a power transmission coil on a wireless-charging power transmission coil panel, perform a center alignment for the power reception coil and the power transmission coil to have central winding areas that are in alignment, and perform a proximity alignment for aligning the power reception coil to be in proximity to the power transmission coil by a preset proximity distance, thereby maximizing the wireless power transfer efficiency.

## Description

### TECHNICAL FIELD

The present disclosure in some embodiments relates to a coil alignment control method and a coil alignment control apparatus for the wireless charging of a mobile object. More particularly, the present disclosure relates to a method and apparatus for controlling coil alignment for the wireless charging of a mobile object, which can increase wireless charging efficiency by maximizing wireless power transfer efficiency through parallel alignment, center alignment, and proximity alignment of the power transmission coil and power reception coil.

### BACKGROUND

This research was supported by MSIT(Ministry of Science and ICT), Korea, under the Grand Information Technology Research Center support program(IITP-2022-2020-0-01462) supervised by the IITP(lnstitute for Information & communication Technology Planning & Evaluation).

Extensive research on wireless charging or wireless power transfer technology is being actively conducted as a variety of small- and large-power applications are increasingly discovered as with more recent medium-power applications over a wide power range from several tens of watts to several kW. In smartphones and general home appliances, wireless charging technology has already become familiar to users, and wireless charging technology is also rapidly developing for mobile objects such as logistics robots, drones, various vehicles, and airplanes and ships.

The industry for electric vehicle wireless charging systems is seeking an implementation capable of automatic wireless charging only with the driver parking in a parking lot by improving the existing plug-in type wired charging method. Implementing the optimal system requires considerations of matters related to the charging infrastructure, such as wireless charging efficiency, the avoidance and removal of foreign substances, communication method, and charging method, etc., and matters related to electric vehicles, such as the vehicle battery capacity, the modularization and vehicular mounting of the wireless power receiver, etc. In the wireless charging system, wireless charging efficiency is a very important factor. In the magnetic resonance type wireless charging system used for mobile objects, the alignment of the power transmission coil (primary coil) with the power reception coil (secondary coil) strongly affects the wireless power transfer efficiency.

Concerning coil alignment technology, Patent Document 1 undermentioned as prior art is Korean Patent No. 10-2017-0142046 published on December 27, 2017, discloses the technology about 'Coil Alignment Method in Wireless Power Transfer System and Apparatus Using the Same'. This prior art installs a pair of beam bars orthogonal to each other on a power transmission coil of a ground assembly (GA) and has a light-blocking unit protruding from a vehicle assembly (VA). The power transmission coil and the power reception coil are aligned by controlling the light-blocking unit to move to a position where it intercepts and blocks the orthogonal light beams.

Patent Document 2 undermentioned as a prior art related to coil alignment technology is Korean Patent No. 10-2018-0095445 published on August 27, 2018, discloses the technology about 'Method and Apparatus for Aligning Position Using Low Frequency Antenna in Wireless Charging System'. This prior art provides a ground assembly (GA) and a vehicle assembly (VA) for coil alignment respectively with a plurality of separate low-frequency transmission/reception antennas for use in aligning the power transmission coil with the power reception coil.

However, the prior arts are difficult to maximize wireless power transfer efficiency as they focus only on making alignment of the central winding region of the power transmission coil with that of the power reception coil. In other words, they take no account of the parallel alignment of the power transmission-side surface of the power transmission coil with the power reception-side surface of the power reception coil and the proximity alignment of the two surfaces, and therefore when no parallel alignment state is present or no proximity alignment within a certain value is provided, the wireless power transfer efficiency is difficult to maximize.

On the other hand, wireless charging technology is expanding and developing in the field of logistics robots such as an automated guided vehicle (AGV) or automated mobile robot (AMR). Logistics robots, for example, widely employ a structure where a power transmission coil and a power reception coil are respectively arranged vertically on the ground, unlike charging a smartphone or an electric vehicle.

The reason vertical wireless charging arrangement are preferred in mobile objects such as logistics robots is that the charging system's transmitter when installed on the ground of a smart factory or building using logistics robots not only increases the cost but also makes it very inconvenient to do facility change and relocation. Additionally, in the case of a robot system that uses magnetic tape to guide a path the installation of a power transmitter on the floor is close to impossible. Moreover, the horizontal type wireless charging arrangement frequently suffers from foreign substances sticking to the surface of the power transmitter, requiring periodic management, while the vertical type wireless charging scheme lets such contaminants land on the floor by gravity advantageously unlike the horizontal charging arrangement.

However, the vertical wireless charging arrangement still needs a coil alignment technique to increase the wireless charging efficiency, and it is difficult to maximize the wireless power transmission efficiency with the aforementioned prior technologies. In addition, the vertical wireless charging arrangement, for example, may have its power reception coil installed at different heights depending on the mobile object type, and a wireless charging technology to correspond to such cases is required.

### [Prior Art Literature]

### [Patent Documents]

(Patent Document 1) Korean Patent Application Publication No. 10-2017-0142046
(Patent Document 2) Korean Patent Application Publication No. 10-2018-0095445

### SUMMARY

According to at least one embodiment, the present disclosure provides a coil alignment control apparatus for wirelessly charging a mobile object from a wireless-charging power transmission station. The wireless-charging power transmission station includes a plurality of power transmission coil panels, a power-transmission-coil selection switch, and a power transmitter circuit and control module. The power transmission coil panels each include a power transmission coil and a power-transmitter infrared transceiver unit. The power-transmission-coil selection switch is configured to select any one of the plurality of power transmission coil panels. The power transmitter circuit and control module is configured to control power transmission using a selected power transmission coil panel that is selected through the power-transmission-coil selection switch. The mobile object includes a power reception coil panel, a mobile-object maneuver controller, and a power receiver circuit and control module. The power reception coil panel includes a first power-receiver infrared transceiver unit, a second power-receiver infrared transceiver unit, and a power reception coil. The mobile-object maneuver controller is configured to control starting of the mobile object for coil alignment. The power receiver circuit and control module is configured to cause the first power-receiver infrared transceiver unit and the second power-receiver infrared transceiver unit to receive an infrared ray emitted from the power-transmitter infrared transceiver unit of a selected power transmission coil panel, to measure infrared reception power densities, respectively, to generate respective measured infrared reception power densities, and to controllably maneuver the mobile object through the mobile-object maneuver controller to render the respective measured infrared reception power densities to be equal, so that the power reception coil and a power transmission coil on the selected power transmission coil panel have central winding areas that are in alignment. Here, the first power-receiver infrared transceiver unit and the second power-receiver infrared transceiver unit are installed at a distance from each other.

According to another embodiment, the present disclosure provides a coil alignment control method for wirelessly charging a mobile object from a wireless-charging power transmission station, including the steps (not necessarily in the following order) of (i) selecting, from a plurality of power transmission coil panels belonged to the wireless-charging power transmission station and each having a different height, a power transmission coil panel corresponding in height to a power reception coil of the mobile object, as a selected power transmission coil panel, (ii) performing a parallel alignment for aligning a power reception-side surface of the power reception coil to be parallel to a power transmission-side surface of a power transmission coil on the selected power transmission coil panel, (iii) performing a center alignment for the power reception coil and the power transmission coil to have central winding areas that are in alignment, and (iv) performing a proximity alignment for aligning the power reception coil to be in proximity to the power transmission coil. Here, the performing of the center alignment including the steps (not necessarily in the following order) of (iii-1) receiving an infrared ray emitted from the selected power transmission coil panel at a power-transmitter infrared transceiver unit provided in the selected power transmission coil panel and measuring infrared reception power densities, by the mobile object at a first power-receiver infrared transceiver unit and a second power-receiver infrared transceiver unit provided in the mobile object, respectively, to generate respective measured infrared reception power densities, and (iii-2) controllably maneuvering the mobile object through a mobile-object maneuver controller provided in the mobile object to render the respective measured infrared reception power densities to be equal.

According to yet another embodiment, the present disclosure provides a coil alignment control apparatus for wirelessly charging a mobile object from a wireless-charging power transmission station. The wireless-charging power transmission station includes a power transmission coil panel and a power transmitter circuit and control module. The power transmission coil panel includes a power transmission coil and a power-transmitter infrared transceiver unit. The power transmitter circuit and control module is configured to control power transmission using the power transmission coil panel. The mobile object includes a power reception coil panel, a mobile-object maneuver controller, and a power receiver circuit and control module. The power reception coil panel includes a first power-receiver infrared transceiver unit, a second power-receiver infrared transceiver unit, and a power reception coil. The mobile-object maneuver controller is configured to control starting of the mobile object for coil alignment. The power receiver circuit and control module is configured to make the first power-receiver infrared transceiver unit and the second power-receiver infrared transceiver unit to receive an infrared ray emitted from the power-transmitter infrared transceiver unit of the power transmission coil panel, to measure infrared reception power densities, respectively, to generate respective measured infrared reception power densities, and to controllably maneuver the mobile object through the mobile-object maneuver controller to render the respective measured infrared reception power densities to be equal, so that the power reception coil and a power transmission coil on the power transmission coil panel have central winding areas that are in alignment. Here, the first power-receiver infrared transceiver unit and the second power-receiver infrared transceiver unit are installed at a distance from each other.

### BRIEF DESCRIPTION OF THE DRAWINGS

FIG. 1 is a block diagram of major components of a coil alignment control apparatus for wireless charging of a mobile object according to at least one embodiment of the present disclosure.
FIG. 2 is a flowchart of sequential major steps of a coil alignment control method for wireless charging of a mobile object according to at least one embodiment of the present disclosure.
FIG. 3 is a diagram illustrating an operation mechanism for parallel coil alignment according to at least one embodiment of the present disclosure.
FIG. 4 is a diagram illustrating an operation mechanism for center coil alignment according to at least one embodiment of the present disclosure.
FIG. 5 is a diagram illustrating an operation mechanism for proximity coil alignment according to at least one embodiment of the present disclosure.

### REFERENCE NUMERICALS

10: wireless-charging power transmission station
11, 12, 13, 14, 15: power transmission coil panel
16: power-transmission-coil selection switch
17: power transmitter circuit and control module
20: mobile object
21: power reception coil panel
22: power receiver circuit and control module
23: mobile-object maneuver controller
24: rechargeable battery
S1, S2, S3, S4, S5: power transmission coil
C1, C2, C3, C4, C5: power-transmitter infrared transceiver unit
R: power reception coil
P: first power-receiver infrared transceiver unit
Q: second power-receiver infrared transceiver unit

### DETAILED DESCRIPTION

Aspects of the present disclosure provide a coil alignment control method and a coil alignment control apparatus for the wireless charging of a mobile object, which can maximize the wireless power transfer efficiency by aligning the transmission-side surface of the power transmission coil and the power reception-side surface of the power reception coil in a parallel state.

Another aspect of the present disclosure provides a coil alignment control method and a coil alignment control apparatus for the wireless charging of a mobile object, which can maximize wireless power transfer efficiency in a vertical wireless charging scheme.

Yet another aspect of the present disclosure provides a coil alignment control method and a coil alignment control apparatus for the wireless charging of a mobile object, which can work well with different mobile objects having respective power reception coils provided at different heights to consistently maximize wireless power transfer efficiency.

Hereinafter, some embodiments of the present disclosure will be described in detail with reference to the accompanying illustrative drawings. The present disclosure may, however, be embodied in different forms and should not be constructed as limited to the embodiments set forth herein. Rather, these embodiments are provided so that this disclosure will be thorough and complete, and will fully convey the scope of the present disclosure to those skilled in the art. Further, in the following description of some embodiments, a detailed description of related known functions and components when considered to obscure the subject of the present disclosure will be omitted for the purpose of clarity and for brevity.

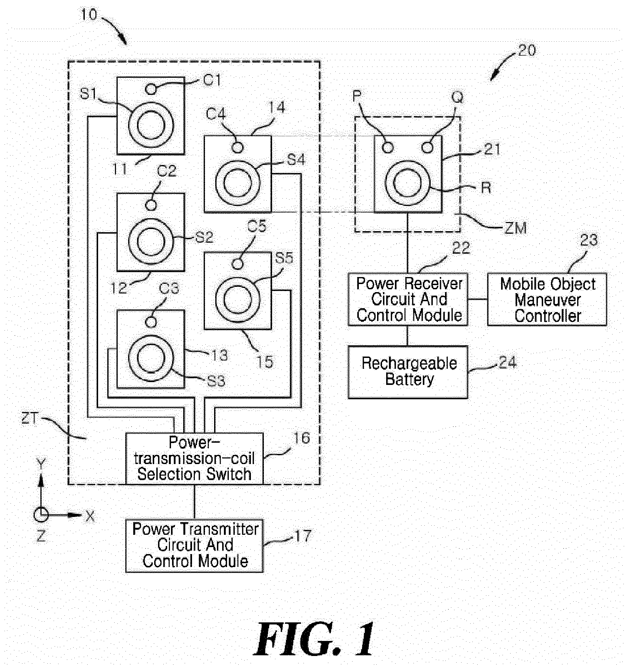

FIG. 1 is a block diagram of major components of a coil alignment control apparatus for wireless charging of a mobile object according to at least one embodiment of the present disclosure.

Referring to FIG. 1, the coil alignment control apparatus for wireless charging of a mobile object according to at least one embodiment is composed of a wireless-charging power transmission station 10 and a mobile object 20.

The wireless-charging power transmission station 10 includes a plurality of power transmission coil panels 11, 12, 13, 14, 15, a power-transmission-coil selection switch 16, and a power transmitter circuit and control module 17.

The plurality of power transmission coil panels 11, 12, 13, 14, 15 have power transmission coils S1, S2, S3, S4, S5, and power-transmitter infrared transceiver units C1, C2, C3, C4, C5, respectively. The power-transmitter infrared transceiver units C1, C2, C3, C4, C5 may each use an LED as an infrared source and a photodiode as an infrared receiver. The power-transmitter infrared transceiver units C1, C2, C3, C4, C5 operate in measurement mode as well as infrared communication mode.

The power transmitter circuit and control module 17 selects any one of the plurality of power transmission coil panels 11, 12, 13, 14, 15 through the power-transmission-coil selection switch 16 to perform power transmission.

The mobile object 20 includes a power reception coil panel 21, a power receiver circuit and control module 22, a mobile-object maneuver controller 23, and a rechargeable battery 24.

The power reception coil panel 21 has a first power-receiver infrared transceiver unit P, a second power-receiver infrared transceiver unit Q, and a power reception coil R installed at distances from one another. The first and second power-receiver infrared transceiver units P and Q may each use an LED as an infrared source and a photodiode as an infrared receiver. The infrared light of the LED is on/off modulated at different frequencies (e.g. 32 kHz, 82 kHz). When a plurality of wireless power transfers is performed in a dense space, a code division multiple access (CDMA) technique for additionally performing code modulation may be employed to prevent interference between infrared sensors. The first and second power-receiver infrared transceiver units P and Q operate not only in measurement mode but also in infrared communication mode.

The mobile-object maneuver controller 23 controls the maneuver of the mobile object for coil alignment. The power receiver circuit and control module 22 uses, for example, the power-transmitter infrared transceiver unit C4 of the selected power transmission coil panel 14 and the first and second power-receiver infrared transceiver units P and Q to measure the alignment state of the power transmission coil S4 of the selected power transmission coil panel 14 and the power reception coil R. The power receiver circuit and control module 22 performs coil alignment control through the mobile-object maneuver controller 23 according to the measured alignment state. A specific coil alignment control operation will be described below. After coil alignment, the power receiver circuit and control module 22 controls the charging of the rechargeable battery 24.

A plurality of power transmission coil panels 11, 12, 13, 14, 15 and the power reception coil panel 21 of the mobile object 20 constitute a vertical wireless charging structure each disposed in a vertical direction on the ground. The power reception coil R may have different heights from the ground depending on the type of the mobile object 20. To service each of the various types of mobile objects having different heights, the plurality of power transmission coils S1, S2, S3, S4, S5 installed in the wireless-charging power transmission station 10 is also installed to be spaced apart from each other at different corresponding heights. Therefore, one wireless-charging power transmission station 10 can service mobile objects having power reception coils installed at different heights. FIG. 1 illustrates a case of wireless power transfer performed between the mobile object 20 and the power transmission coil panel 14 installed at a corresponding height.

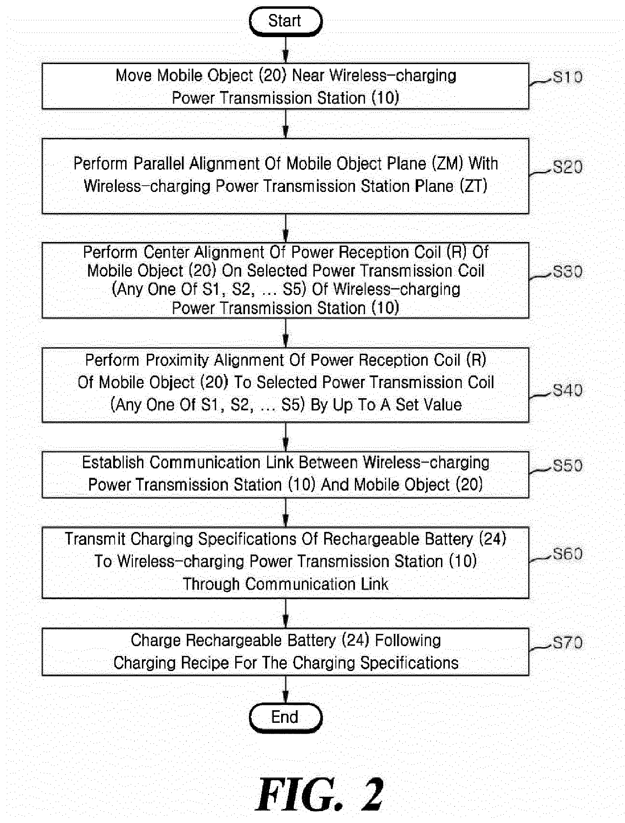

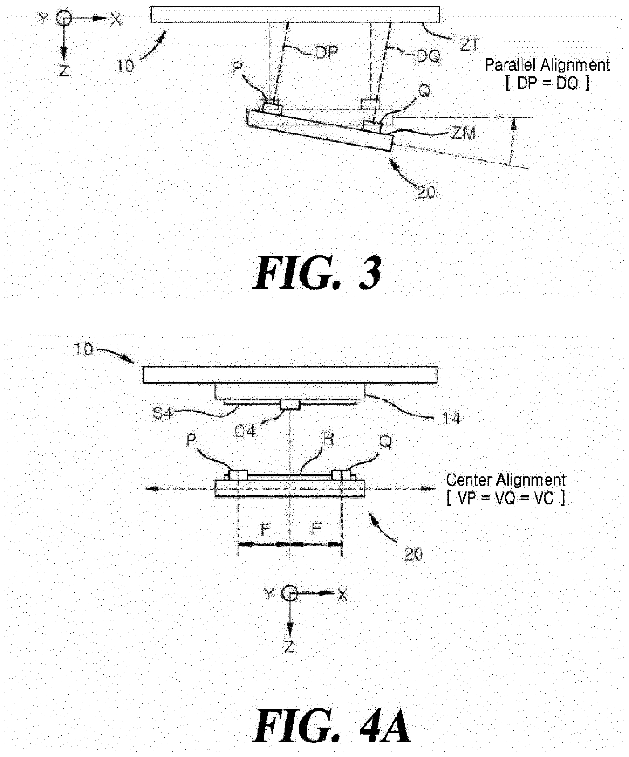

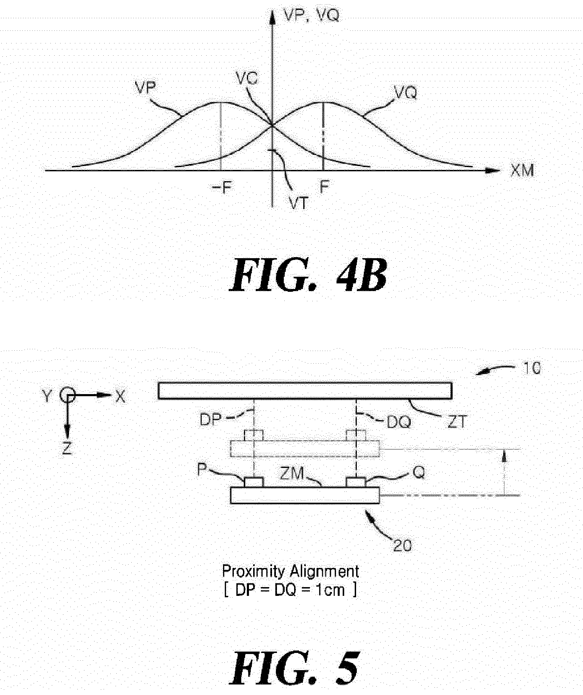

FIG. 2 is a flowchart sequentially showing the major steps of a coil alignment control method for wireless charging of a mobile object according to at least one embodiment of the present disclosure. FIG. 3 is a diagram illustrating an operation mechanism for parallel coil alignment according to at least one embodiment of the present disclosure. FIG. 4 is a diagram illustrating an operation mechanism for center coil alignment according to at least one embodiment of the present disclosure. FIG. 5 is a diagram illustrating an operation mechanism for proximity coil alignment according to at least one embodiment of the present disclosure.

Referring to FIGS. 1 and 2, the mobile object 20 that needs wireless charging moves near the wireless-charging power transmission station 10 in Step S10.

Step S20 performs a parallel alignment control step of aligning a mobile object plane ZM parallel to a wireless-charging power transmission station plane ZT. The wireless-charging power transmission station plane ZT is substantially the power transmission-side surface of the power transmission coil and the mobile object plane ZM is substantially the power reception-side surface of the power reception coil.

Specifically, referring to FIG. 3, in the parallel alignment control step of Step S20, the power receiver circuit and control module 22 operates the first and second power-receiver infrared transceiver units P and Q in measurement mode. That is, the power receiver circuit and control module 22 measures each of the distances DP and DQ to the power transmission-side surface ZT of the power transmission coil by emitting infrared rays from the first and second power-receiver infrared transceiver units P and Q . Using the measured distances DP and DQ, the power receiver circuit and control module 22 controls so that the mobile-object maneuver controller 23 operates to parallelize the power reception-side surface ZM of the power reception coil R and the power transmission-side surface ZT of the power transmission coil S4 of the selected power transmission coil panel 14, i.e., to equalize the distance DP and distance DQ. Through the parallel alignment control step, the mobile object 20 is controlled so that the distance between the wireless-charging power transmission station 10 and the mobile object 20 becomes a specified value D1 (e.g., 15 cm). The specified value D1 is a value suitable for causing the first and second power-receiver infrared transceiver units P and Q to be aligned in the X-axis direction by using the first and second power-receiver infrared transceiver units P, Q, and the power-transmitter infrared transceiver unit C4. A method of using all of the first and second power-receiver infrared transceiver units P, Q, and the power-transmitter infrared transceiver unit C4 will be described below.

In Step S30, the power receiver circuit and control module 22 operates the first and second power-receiver infrared transceiver units P and Q in a measurement mode. That is, the first and second power-receiver infrared transceiver units P and Q each receive the infrared rays emitted from the power-transmitter infrared transceiver unit C4 of the selected power transmission coil panel 14 to measure the infrared reception power densities VP and VQ, respectively. The first and second power-receiver infrared transceiver units P and Q have the same characteristics regarding the infrared reception power density that depends on the reception angle. Exemplified as a graph in FIG. 4B are the infrared reception power densities VP and VQ obtained respectively by the first and second power-receiver infrared transceiver units P and Q receiving the infrared radiations emitted from the power-transmitter infrared transceiver units C4.

Specifically, referring to FIG. 4A, the first and second power-receiver infrared transceiver units P and Q, and the power-transmitter infrared transceiver unit C4 have the same height with respect to the Y-axis. In the previous step, the power transmission coil S4 and the power reception coil R are aligned to be parallel. At this time, the coordinates of the power-transmitter infrared transceiver unit C4 are set as the reference point. When the center of the distance between the first and second power-receiver infrared transceiver units P and Q is aligned with the reference point, then the first power-receiver infrared transceiver unit P and the second power-receiver infrared transceiver unit Q are placed along the X-axis at X = -F and X = F, respectively.

When the power-transmitter infrared transceiver unit C4 radiates infrared light, it has a radiation power density that is characterized by symmetry in the X-axis direction. As the mobile object 20 moves left or right in the X-axis direction, the power receiver circuit and module 22 compares the infrared reception power densities VP and VQ received from the first and second power-receiver infrared transceiver units P and Q. When the two values become equal (VP = VQ = VC), it is determined that the center alignment is made in the X-axis direction. The reference value VT for the same measured value VC may be set to 0.5 to 0.8 times VC.

The mobile-object maneuver controller 23 is controlled to operate until the two received power densities VP and VQ measured with these measurement references have the same measurement value VC. Then, the central winding area of the power reception coil R is aligned with the central winding area of the power transmission coil S4 of the selected power transmission coil panel 14. In other words, the center alignment of the power reception coil R of the mobile object 20 to the selected power transmission coil (any one of S1 to S5) of the wireless-charging power transmission station 10 is achieved.

In Step S40, the power receiver circuit and control module 22 operates the first and second power-receiver infrared transceiver units P and Q in a measurement mode. That is, the power receiver circuit and control module 22 measures each of the distances from the first and second power-receiver infrared transceiver units P and Q to the power transmission-side surface ZT of the selected power transmission coil panel 14. The mobile-object maneuver controller is controlled to operate until the measured distances DP and DQ become equal to each other and a set proximity distance (e.g., DP = DQ = 1 cm). In other words, the power reception coil R of the mobile object 20 is aligned to approach up to the set proximity distance from the selected power transmission coil S4. In this case, the previous control steps S20 and S30 may be repeatedly performed to maintain the parallel alignment state and the center alignment state in the X-axis direction.

When the coil alignment control steps are performed from Steps S20 to S40, the mobile object 20 is aligned to the selected power transmission coil panel 14. Thereafter, a control step for wireless charging is performed.

In Step S50, a communication link is established between the wireless-charging power transmission station 10 and the mobile object 20. To establish the communication link, the power-transmitter infrared transceiver unit C4 and the first power-receiver infrared transceiver unit P are operated in a communication mode.

When an infrared communication link is established between the power-transmitter infrared transceiver unit C4 and the first power-receiver infrared transceiver unit P, in Step S60, the power receiver circuit and control module 22 transmits charging specifications (e.g., rechargeable battery type, charging voltage, charging current, etc.) of the rechargeable battery 24 to the wireless-charging power transmission station 10 through the communication link.

In Step S70, the power transmitter circuit and control module 17 controls to transfer charging power through the power transmission coil S4 following a charging recipe for the charging specifications, and the power receiver circuit and control module 22 controls to charge the rechargeable battery 24 with the power received through the power reception coil R.

The above-described embodiments describe the illustrative arrangement of the multiple power transmission coils installed to be spaced apart from each other in the wireless-charging power transmission station at different heights corresponding respectively to the various types of mobile objects having different heights. However, in an environment where only one type of mobile object is used, the present disclosure may correspondingly provide only one power transmission coil in the wireless-charging power transmission station. In addition, although the embodiments herein illustrate the vertical wireless charging structure, it will be well understood that the vertical arrangement may be readily modified into a horizontal implementation based on the idea of the present disclosure.

According to the coil alignment control method and coil alignment control apparatus for the wireless charging of a mobile object by the present disclosure, the transmission-side surface of the power transmission coil and the power reception-side surface of the power reception coil are aligned in a parallel state and then the proximity coil alignment of the central winding region of the power transmission coil with the central winding region of the power reception coil is performed, thereby maximizing the wireless power transfer efficiency.

Additionally, the present disclosure works equally well with a vertical wireless charging-type mobile object, by performing wireless charging with parallel alignment, center alignment, and proximity alignment established between the power transmission coil and the power reception coil, thereby maximizing the wireless power transfer efficiency.

Additionally, the present disclosure equally works well with different mobile objects having respective power reception coils provided at different heights by providing a plurality of selectable power transmission coils suitable for the respective heights and establishing parallel alignment, center alignment, and proximity alignment between a single selected power transmission coil and the power reception coil, thereby maximizing the wireless power transfer efficiency.

The above-described embodiments of the present disclosure for the coil alignment apparatus and coil alignment control method for the wireless charging of a mobile object are merely exemplary, and those of ordinary skill in the art to which the present disclosure pertains will appreciate that various modifications and other equivalent embodiments are readily available.

Therefore, it will be well understood that the present disclosure is not limited to the form recited in the above-detailed description. Therefore, the true scope of protection of the present disclosure should be determined by the technical idea of the appended claims. Moreover, it is to be understood that the present disclosure covers all of the changes, equivalents, and substitutes falling within the idea and scope of the disclosure as defined by the appended claims.

## Claims

1. A coil alignment control apparatus for wirelessly charging a mobile object from a wireless-charging power transmission station, the apparatus comprising:
the wireless-charging power transmission station comprising:
a plurality of power transmission coil panels each including a power transmission coil and a power-transmitter infrared transceiver unit,
a power-transmission-coil selection switch configured to select any one of the plurality of power transmission coil panels, and
a power transmitter circuit and control module configured to control power transmission using a selected power transmission coil panel that is selected through the power-transmission-coil selection switch, and
the mobile object comprising:
a power reception coil panel including a first power-receiver infrared transceiver unit, a second power-receiver infrared transceiver unit, and a power reception coil,
a mobile-object maneuver controller configured to control maneuver of the mobile object for coil alignment, and
a power receiver circuit and control module configured to make the first power-receiver infrared transceiver unit and the second power-receiver infrared transceiver unit to each receive infrared rays emitted from the power-transmitter infrared transceiver unit of a selected power transmission coil panel and measure infrared reception power densities, respectively, to generate respective measured infrared reception power densities, and to control maneuver of the mobile object through the mobile-object maneuver controller so that the respective measured infrared reception power densities become equal to align a central winding area of the power reception coil with a central winding area of the power transmission coil on the selected power transmission coil panel ,
wherein the first power-receiver infrared transceiver unit and the second power-receiver infrared transceiver unit are installed at a distance from each other.

2. The coil alignment control apparatus of claim 1, wherein the power transmission coil panels each have a different height, and any one power transmission coil panel corresponding to a height of the power reception coil of the mobile object is selected to perform a power transmission.

3. The coil alignment control apparatus of claim 1 or 2, wherein the power receiver circuit and control module is configured
to measure distances from the first power-receiver infrared transceiver unit and the second power-receiver infrared transceiver unit to a power transmission-side surface of the selected power transmission coil panel to generate respective measured distances, and
to control the maneuver of the mobile object through the mobile-object maneuver controller so that the respective measured distances become equal to further align a power reception-side surface of the power reception coil to be parallel to the power transmission-side surface.

4. The coil alignment control apparatus of any one of claims 1 to 3, wherein the power receiver circuit and control module is configured
to measure distances from the first power-receiver infrared transceiver unit and the second power-receiver infrared transceiver unit to a power transmission-side surface of the selected power transmission coil panel to generate respective measured distances, and
to control the maneuver of the mobile object through the mobile-object maneuver controller so that the respective measured distances are equal to each other and all become a set reference value to further align the power reception coil to be in close proximity to the power transmission coil on the selected power transmission coil panel.

5. A coil alignment control method for wirelessly charging a mobile object from a wireless-charging power transmission station, the method comprising:
selecting, from a plurality of power transmission coil panels belonging to the wireless-charging power transmission station and each having different heights, a power transmission coil panel corresponding to a height of a power reception coil of the mobile object, as a selected power transmission coil panel;
performing a parallel alignment for aligning a power reception-side surface of the power reception coil to be parallel to a power transmission-side surface of a power transmission coil on the selected power transmission coil panel;
performing a center alignment for a central winding area of the power reception coil and a central winding area of the power transmission coil to align; and
performing a proximity alignment for aligning the power reception coil to be in close proximity to the power transmission coil,
wherein the performing of the center alignment comprises:
measuring infrared reception power densities of infrared rays emitted by a power-transmitter infrared transceiver unit of the selected power transmission coil panel and received by each of the first power-receiver infrared transceiver unit of the mobile object and a second power-receiver infrared transceiver unit of the mobile object to generate respective measured infrared reception power densities, and
controlling the maneuver of the mobile object through a mobile-object maneuver controller provided in the mobile object so that the respective measured infrared reception power densities become equal.

6. The coil alignment control method of claim 5, wherein the performing of the parallel alignment comprises:
measuring distances from the first power-receiver infrared transceiver unit and the second power-receiver infrared transceiver unit to a power transmission-side surface of the selected power transmission coil panel to generate respective measured distances; and
controlling the maneuver of the mobile object through the mobile-object maneuver controller so that the respective measured distances become equal.

7. The coil alignment control method of claim 5 or 6, wherein the performing of the proximity alignment comprises:
measuring distances from the first power-receiver infrared transceiver unit and the second power-receiver infrared transceiver unit to a power transmission-side surface of the selected power transmission coil panel to generate respective measured distances; and
controlling the maneuver of the mobile object through the mobile-object maneuver controller so that the respective measured distances become equal to each other and all become a set reference value.

8. A coil alignment control apparatus for wirelessly charging a mobile object from a wireless-charging power transmission station, the apparatus comprising:
the wireless-charging power transmission station comprising:
a power transmission coil panel including a power transmission coil and a power-transmitter infrared transceiver unit, and
a power transmitter circuit and control module configured to control power transmission using the power transmission coil panel, and
the mobile object comprising:
a power reception coil panel including a first power-receiver infrared transceiver unit, a second power-receiver infrared transceiver unit, and a power reception coil,
a mobile-object maneuver controller configured to control maneuver of the mobile object for coil alignment, and
a power receiver circuit and control module configured to make the first power-receiver infrared transceiver unit and the second power-receiver infrared transceiver unit to receive infrared rays emitted from the power-transmitter infrared transceiver unit of the power transmission coil panel and measure infrared reception power densities, respectively, to generate respective measured infrared reception power densities, and to control maneuver of the mobile object through the mobile-object maneuver controller so that the respective measured infrared reception power densities become equal to align a central winding area of the power reception coil and a central winding area of a power transmission coil on the power transmission coil panel,
wherein the first power-receiver infrared transceiver unit and the second power-receiver infrared transceiver unit are installed at a distance from each other.

9. The coil alignment control apparatus of claim 8, wherein the power receiver circuit and control module is configured
to measure distances from the first power-receiver infrared transceiver unit and the second power-receiver infrared transceiver unit to a power transmission-side surface of the power transmission coil panel to generate respective measured distances, and
to control the maneuver of the mobile object through the mobile-object maneuver controller so that the respective measured distances become equal to further align a power reception-side surface of the power reception coil to be parallel to the power transmission-side surface.

10. The coil alignment control apparatus of claim 8 or 9, wherein the power receiver circuit and control module is configured
to measure distances from the first power-receiver infrared transceiver unit and the second power-receiver infrared transceiver unit to a power transmission-side surface of the power transmission coil panel to generate respective measured distances, and
to control the maneuver of the mobile object through the mobile-object maneuver controller so that the respective measured distances are equal to each other and all become a set reference value to further align the power reception coil to be in close proximity to the power transmission coil on the power transmission coil panel.
